# EUROPEAN PATENT APPLICATION

(11) **EP 4 822 060 A1**
(43) Date of publication of application: **14.10.2026**
(21) Application number: 25744856.3
(22) Date of filing: 20.01.2025
(51) Int. Cl.: C25B 9/00, C25B 1/042, C25B 9/01, C25B 9/23, C25B 9/70

(54) **ELECTROLYTIC CELL STACK, ELECTROLYTIC CELL CARTRIDGE, ELECTROLYTIC CELL MODULE, AND METHOD FOR MANUFACTURING ELECTROLYTIC CELL STACK**

(30) Priority: 26.01.2024 JP 2024010231
(71) Applicant: MITSUBISHI HEAVY INDUSTRIES, LTD., Tokyo 100-8332 (JP)
(72) Inventor: HIWATASHI, Kenichi, Tokyo 100-8332 (JP); YOSHIDA, Shin, Tokyo 100-8332 (JP); TAKENOBU, Koichi, Tokyo 100-8332 (JP); SUEMORI, Shigenori, Tokyo 100-8332 (JP)
(74) Representative: Müller Schupfner & Partner Patent- und Rechtsanwaltspartnerschaft mbB (Muc)
(86) International application number: PCT/JP2025/001561
(87) International publication number: WO 2025/159042

(57) **Abstract**

The purpose of the present disclosure is to provide an electrolytic cell stack capable of increasing the amount of product generated by electrolysis while suppressing the temperature rise of the cell stack. An electrolytic cell stack (101) according to the present disclosure comprises: an electrolysis unit cell (105) that has a hydrogen electrode containing Ni, an oxygen electrode, and a solid electrolyte membrane and is formed in the circumferential direction of a base tube; and an interconnector that electrically connects a plurality of electrolysis unit cells arranged in the axial direction of the base tube. When the distance between the ends of the oxygen electrode, oriented in the axial direction of the base tube, in each electrolysis unit cell is defined as the width W of the electrolysis unit cell, and the area on the base tube in which the plurality of electrolysis unit cells are arranged is divided into a first end portion (10), a central portion (11), and a second end portion (12) along the axial direction, the widths W1, W3 of the electrolysis single cells (105b, 105c) positioned in the first end portion and/or the second end portion is 1.5 to 3 times greater than the width W2 of the electrolysis unit cell (105a) positioned in the central portion.

## Description

### [Technical Field]

The present disclosure relates to an electrolysis cell stack, an electrolysis cell cartridge, an electrolysis cell module, and a manufacturing method of an electrolysis cell stack.

### [Background Art]

Electrolysis cells that electrochemically decompose water to produce hydrogen and oxygen are for hydrogen production methods without involving emission of carbon dioxide and have excellent environmental properties. Among such electrolysis cells, solid oxide electrolysis cells (SOECs) use ceramics such as yttria-stabilized zirconia as electrolyte, use high-temperature steam as feedstock, and thus can produce hydrogen at higher efficiency than other electrolysis cells. For the purpose of decarbonization, it is also possible to perform co-electrolysis that uses carbon dioxide (CO₂) as feedstock and uses electrolyzed hydrogen as a reducing agent to directly produce carbon monoxide (CO).

Patent Literature 1 discloses a hydrogen producing system including a cell stack in which a plurality of electrolysis cells each having a cathode, an electrolyte, and an anode are aligned on a substrate tube. In the SOEC of such a hydrogen producing system disclosed in Patent Literature 1, the cathode is composed of an oxide of a composite material of Ni and a zirconia-based electrolyte material.

### [Citation List]

### [Patent Literature]

[PTL 1]
Japanese Patent No. 7282968

### [Summary of Invention]

### [Technical Problem]

An increase of current flowing in an SOEC facilitates electrochemical decomposition (electrolysis) of water and can increase the amount of produced hydrogen. However, it is not possible to increase the current flowing in the SOEC in a simple manner.

Electrolysis of water is an endothermic reaction. In contrast, a flow of current in an SOEC generates Joule heat. As long as the current is low, there is no problem because the endothermic reaction is dominant. However, operation with high current would cause a rise in temperature due to heat generation by Joule heat generated by the SOEC itself. Exposure of an SOEC to a high temperature causes Ni of the cathode to sinter, increases the internal resistance of the SOEC, and makes long-term stable electrolysis difficult.

When a cell stack including a plurality of electrolysis cells is operated with high current, heat dissipation in accordance with heat generation due to the high current is not possible. Thus, the temperature becomes higher on the outlet side in a flow of a feed gas (such as steam). Typically, both ends of a cell stack are held by holding members formed of a metal material with high-temperature resistance. However, exposure of such holding members to a high temperature reduces the durability. Thus, the current density of current flowing in an SOEC is limited within a range such that the temperature of the holding members does not exceed an acceptable temperature.

The present disclosure has been made in view of such circumstances and intends to provide an electrolysis cell stack, an electrolysis cell cartridge, an electrolysis cell module, and a manufacturing method of an electrolysis cell stack that can increase the amount of an electrolyzed product while suppressing a rise in temperature of the cell stack.

### [Solution to Problem]

To solve the above problem, the electrolysis cell stack, the electrolysis cell cartridge, the electrolysis cell module, and the manufacturing method of the electrolysis cell stack of the present disclosure employ the following solutions.

The present disclosure provides an electrolysis cell stack including: a plurality of electrolysis single cells each having a cathode containing Ni, an anode, and an electrolyte interposed between the cathode and the anode, the electrolysis single cells being formed circumferentially on a substrate tube; and interconnectors electrically interconnecting the plurality of electrolysis single cells aligned in an axial direction of the substrate tube, and when the distance between ends of the anode in the axial direction of the substrate tube in one electrolysis single cell of the electrolysis single cells is defined as a width of the electrolysis single cell, and a region on the substrate tube in which the plurality of electrolysis single cells are aligned is sectioned into a first end section, a center section, and a second end section along the axial direction, the width of the electrolysis single cell located in the first end section and/or the width of the electrolysis single cell located in the second end section is 1.5 to 3 times the width of the electrolysis single cell located in the center section.

The present disclosure provides an electrolysis cell cartridge including the electrolysis cell stack described above.

The present disclosure provides an electrolysis cell module including the electrolysis cell cartridge described above.

The present disclosure provides a manufacturing method of an electrolysis cell stack including a plurality of electrolysis single cells each having a cathode containing Ni, an anode, and an electrolyte arranged between the cathode and the anode, the electrolysis single cells being formed circumferentially on a substrate tube, and interconnectors electrically interconnecting the plurality of electrolysis single cells aligned in an axial direction of the substrate tube, and the manufacturing method includes: defining the distance between ends of the anode in the axial direction of the substrate tube in one electrolysis single cell of the electrolysis single cells as a width of the electrolysis single cell, and sectioning a region on the substrate tube into a first end section, a center section, and a second end section along the axial direction, the plurality of electrolysis single cells being aligned in the region; and forming the width of the electrolysis single cell located in the first end section and/or the width of the electrolysis single cell located in the second end section to be 1.5 to 3 times the width of the electrolysis single cell located in the center section.

### [Advantageous Effects of Invention]

According to the present disclosure, it is possible to increase the amount of an electrolyzed product while suppressing a rise in temperature of an electrolysis cell stack by arranging wider electrolysis cells in one or both sections close to the ends (the first end section and/or the second end section) than in the center section out of a plurality of electrolysis single cells aligned on a substrate tube.

### [Brief Description of Drawings]

[Fig. 1]

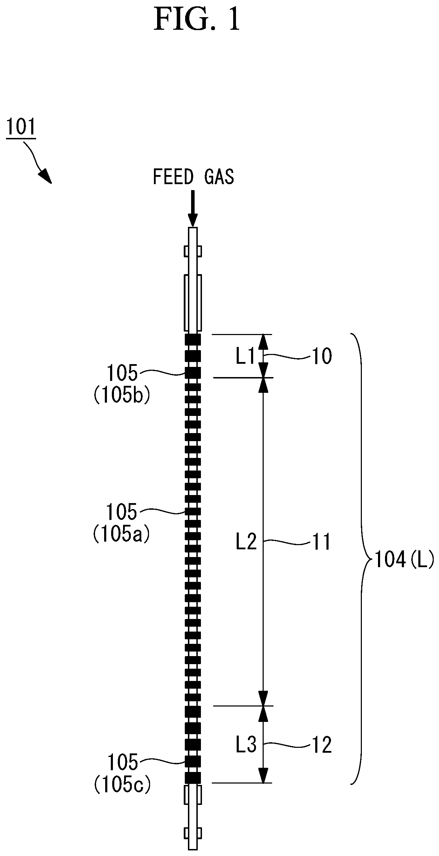

   Fig. 1 is a diagram illustrating one aspect of an electrolysis cell stack according to one embodiment of the present disclosure.
[Fig. 2]

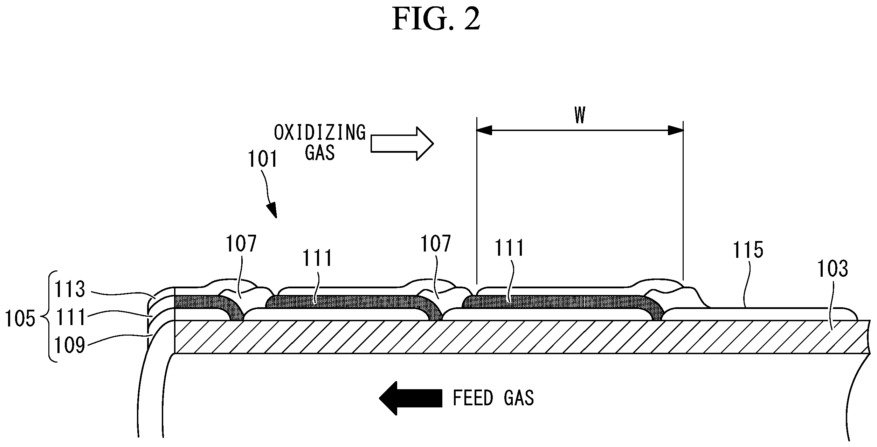

   Fig. 2 is a schematic enlarged sectional view of a first end section of the cell stack.
[Fig. 3]

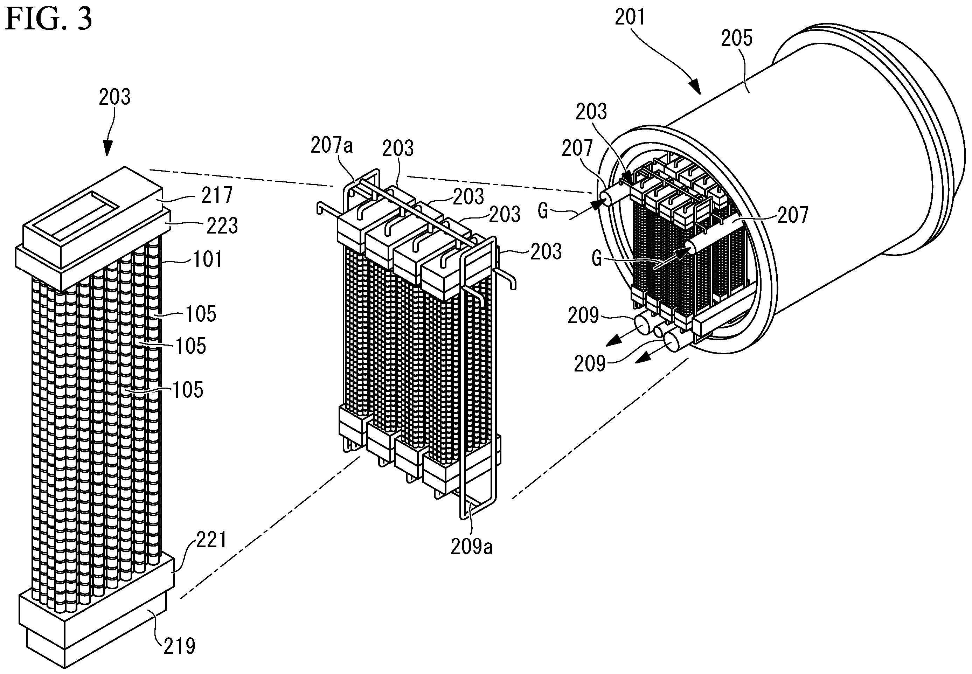

   Fig. 3 is a diagram illustrating one aspect of an electrolysis cell module according to one embodiment of the present disclosure.
[Fig. 4]

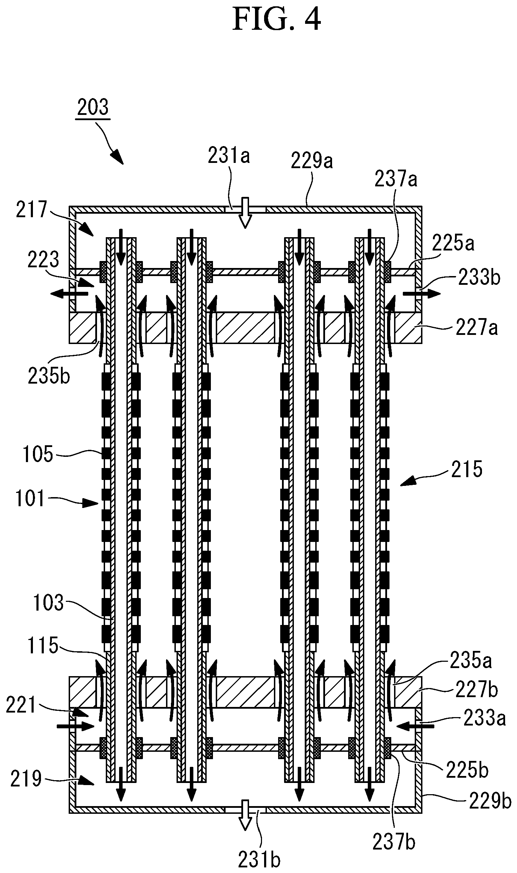

   Fig. 4 is a diagram illustrating one aspect of a cross section of an electrolysis cell cartridge according to one embodiment of the present disclosure.
[Fig. 5A]

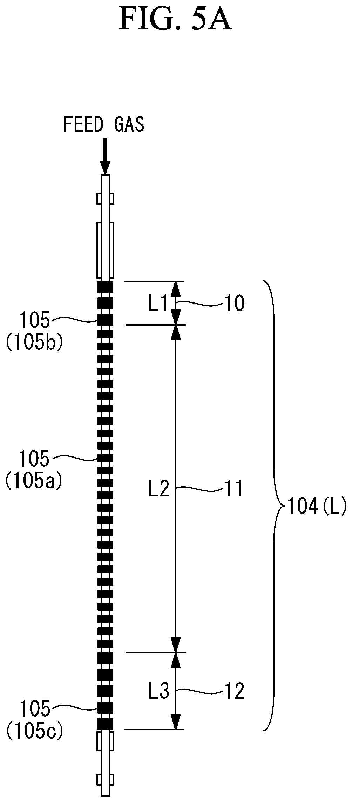

   Fig. 5A is a schematic diagram of a cell stack of Example 2.
[Fig. 5B]

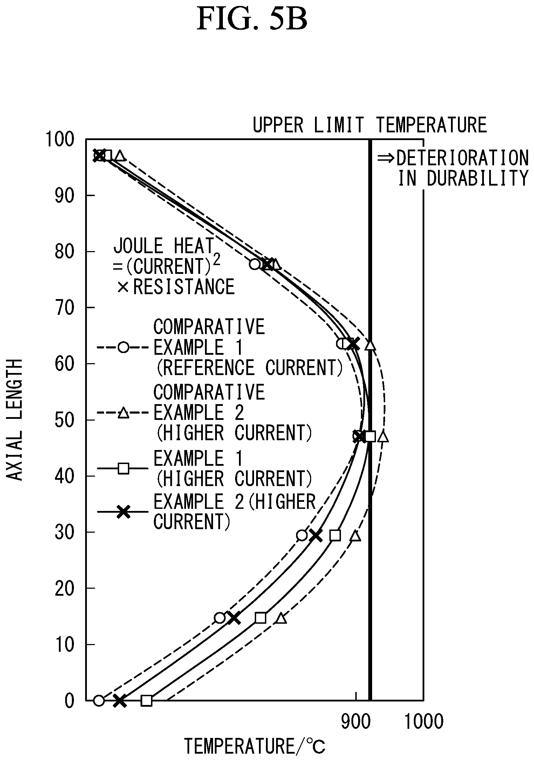

   Fig. 5B is a diagram illustrating simulation results for the temperature distribution in the axial direction of the cell stack illustrated in Fig. 5A.
[Fig. 6]

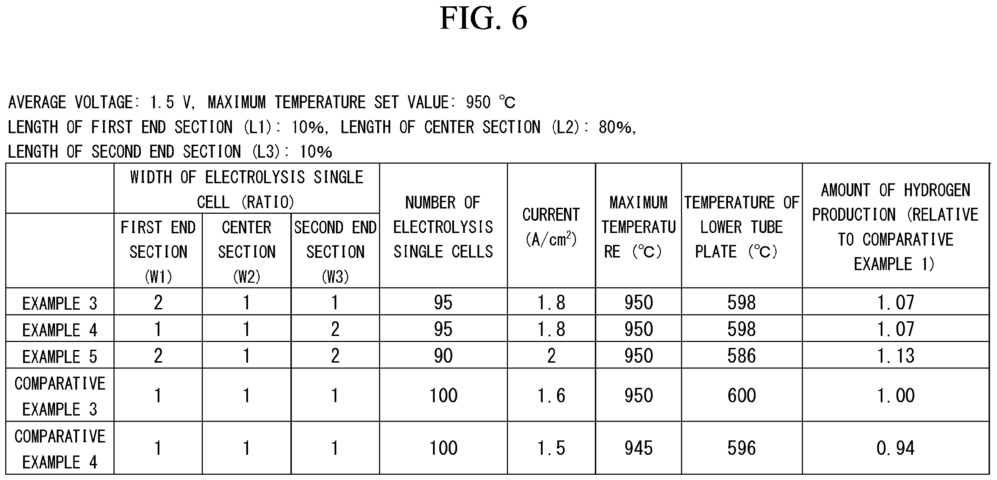

   Fig. 6 is a diagram illustrating width conditions of electrolysis single cells and simulation results in Examples 3 to 5 and Comparative examples 3 and 4.
[Fig. 7]

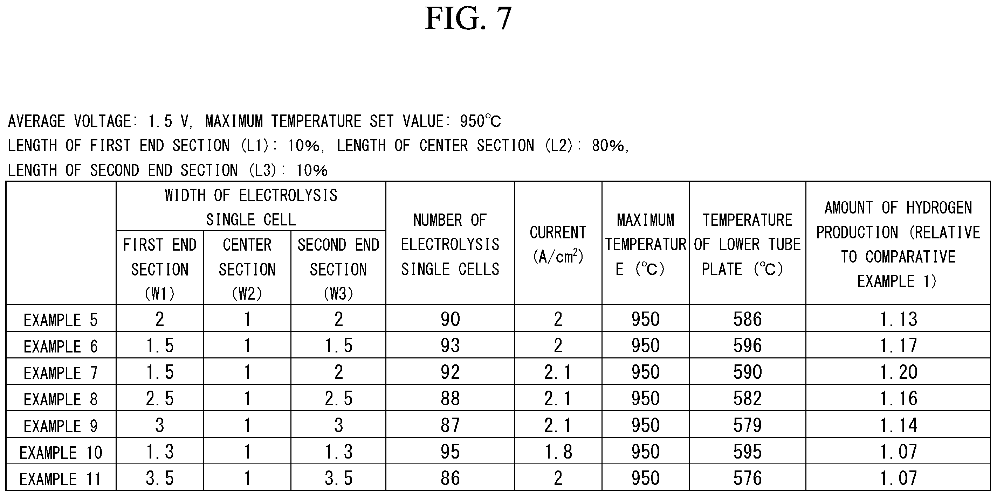

   Fig. 7 is a diagram illustrating width conditions of electrolysis single cells and simulation results in Examples 5 to 11.
[Fig. 8]

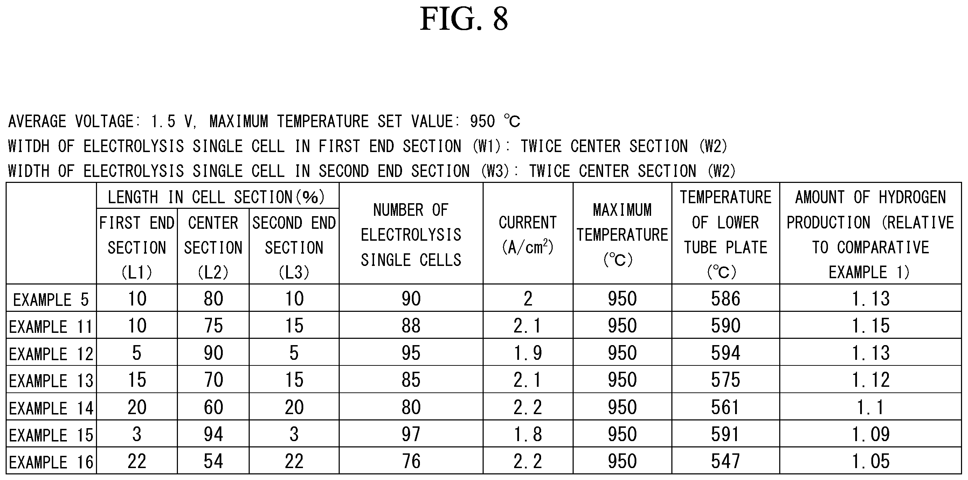

   Fig. 8 is a diagram illustrating configuration conditions of the cell section length and simulation results in Examples 5 and 11 to 16.

### [Description of Embodiments]

One embodiment of an electrolysis cell stack, an electrolysis cell cartridge, an electrolysis cell module, and a manufacturing method of an electrolysis cell stack according to the present disclosure will be described below with reference to the drawings.

In the present disclosure, "electrolysis" means "water electrolysis" or "co-electrolysis".

In the following, for convenience of illustration, positional relationships between respective components described by using expressions of "top/upper/above" and "bottom/lower/below" based on a sheet as a reference are intended to indicate the vertically upward side and the vertically downward side, respectively. In the present embodiment, for features achieving similar effects in both the vertical direction and the horizontal direction, the vertical direction on the sheet is not necessarily limited to the vertically vertical direction and, for example, may correspond to the horizontal direction orthogonal to the vertical direction.

### [First Embodiment]

### [Cell stack]

First, a circular cylindrical cell stack with a substrate tube will be described as an example according to the present embodiment with reference to Figs. 1 and 2. When the substrate tube is not used, for example, the cathode may be formed thick to also serve as the substrate tube, and the disclosure is not limited to the use of a substrate tube. Although the substrate tube in the present embodiment is described with a circular cylindrical one, the substrate tube can have any shape as long as it is cylindrical, and the cross section thereof is not necessarily limited to be circular and may be, for example, elliptical. Cell stacks such as a flat tubular type in which cylindrical circumferential side faces are flattened perpendicularly may be used.

Fig. 1 now illustrates one aspect of a cell stack (an electrolysis cell stack) according to the embodiment. Fig. 2 is a schematic enlarged sectional view of a first end section of the cell stack. The cell stack 101 includes, as an example, a circular cylindrical substrate tube 103, a plurality of electrolysis single cells 105 formed on the outer circumferential face of the substrate tube 103 and aligned in the axial direction of the substrate tube 103, and interconnectors 107 each formed between adjacent electrolysis single cells 105.

In each electrolysis single cell 105, a cathode 109, an electrolyte 111, and an anode 113 are laminated. The electrolyte 111 is interposed between the cathode 109 and the anode 113. The electrolysis single cell 105 is formed circumferentially on the substrate tube. The outer diameter of the substrate tube is 10 mm to 50 mm. The overall length of the substrate tube is 500 mm to 3000 mm.

The cell stack 101 includes a lead film 115 electrically connected via the interconnector 107 to the anode 113 of the electrolysis single cell 105 formed at the farthest one of the ends in the axial direction of the substrate tube 103 out of the plurality of electrolysis single cells 105 formed on the outer circumferential face of the substrate tube 103 and also includes a lead film 115 electrically connected to the cathode 109 of the electrolysis single cell 105 formed at the other farthest end.

In the present embodiment, the region on the substrate tube 103 in which the plurality of electrolysis single cells 105 are aligned is referred to as a cell section 104. In the cell section 104, for example, 50 to 350 electrolysis single cells 105 may be arranged. The cell section 104 is sectioned into three regions of a first end section 10, a center section 11, and a second end section 12. The first end section 10, the center section 11, and the second end section 12 are arranged in order along the axial direction of the substrate tube 103. In Fig. 1, the first end section 10 is located upstream in a feed gas flow, and the second end section 12 is located downstream in the feed gas flow.

Each region of the first end section 10, the center section 11, and the second end section 12 includes a plurality of electrolysis single cells 105. The width of each electrolysis single cell 105a located in the center section 11 may be, for example, 3 mm to 20 mm. The distance between adjacent electrolysis single cells 105 may be, for example, 0.3 mm to 2 mm.

Each width of the electrolysis single cells 105b and 105c located in the first end section 10 and the second end section 12, respectively, is 1.5 to 3 times each width of the electrolysis single cells 105a located in the center section 11. The "width of an electrolysis single cell" (W) corresponds to the distance (width) between the ends of the anode 113 in the axial direction of the substrate tube 103 in one electrolysis single cell 105.

The width (W1) of the electrolysis single cell 105b located in the first end section 10 may be equal to the width (W3) of the electrolysis single cell 105c located in the second end section 12. Respective widths (W1) of the plurality of electrolysis single cells 105b located in the first end section 10 may be the same or may be tapered stepwise toward the center section 11 side.

The width of the electrolysis single cell 105c located in the second end section 12 may be larger than the width of the electrolysis single cell 105b located in the first end section 10. Respective widths (W3) of the plurality of electrolysis single cells 105c located in the second end section 12 may be the same or may be tapered stepwise toward the center section 11 side.

The cell section 104 has a length L extending in the axial direction of the substrate tube 103. The length L of the cell section is preferably around 50% to 90% of the overall length of the substrate tube 103. The length L of the cell section may be, for example, 300 mm to 2500 mm.

The cell section length L is sectioned into three of a first end section length (L1), a center section length (L2), and a second end section length (L3).

The cell section length L is the distance between the electrolysis single cells 105 arranged on both ends out of the electrolysis single cells aligned in the longitudinal direction on the substrate tube, specifically, is the distance from the outer end (the upper side in Fig. 1) of the anode 113 of the electrolysis single cell 105 arranged at the most upstream in the feed gas flow to the outer end (the lower side in Fig. 1) of the anode 113 of the electrolysis single cell 105 arranged at the most downstream in the feed gas flow as illustrated in Fig. 1.

The first end section length L1 is the distance from the outer end (the upper side in Fig. 1) of the anode 113 of the electrolysis single cell 105 located at the farthest end within the section (within the division) (for example, the most upstream in the feed gas flow in Fig. 1) to the outer end (the lower side in Fig. 1) of the anode 113 of the electrolysis single cell 105 located at the opposite end within the section (for example, the most downstream in the feed gas flow in Fig. 1).

The second end section length L3 is the distance from the outer end (the lower side in Fig. 1) of the anode 113 of the electrolysis single cell 105 located at the farthest end within the section (within the division) (for example, the most downstream in the feed gas flow in Fig. 1) to the outer end (the upper side in Fig. 1) of the anode 113 of the electrolysis single cell 105 located at the opposite end within the section (for example, the upstream in the feed gas flow in Fig. 1).

The center section length L2 is the remaining portion of the cell section length L with subtraction of L1 and L3.

The first end section length L1 may be 5% or greater and 20% or less of the cell section length L.

The center section length L2 may be 60% or greater and 90% or less of the cell section length L.

The second end section length L3 may be 5% or greater and 20% or less of the cell section length L. The second end section length L3 may be larger than the first end section length L1.

Next, respective configurations of the electrolysis single cell 105 will be described.

The substrate tube 103 is made of a porous material, and the main component thereof is, for example, CaO-stabilized ZrO₂ (CSZ), a mixture of CSZ and nickel oxide (NiO) (CSZ + NiO), Y₂O₃-stabilized ZrO₂ (YSZ), MgAl₂O₄, or the like. The substrate tube 103 supports the electrolysis single cells 105, the interconnectors 107, and the lead films 115 and also diffuses a feed gas supplied to the inner circumferential face of the substrate tube 103 to the cathode 109 formed on the outer circumferential face of the substrate tube 103 via pores of the substrate tube 103.

The cathode 109 is composed of an oxide of a composite material of Ni and zirconia-based electrolyte material, and, for example, Ni/YSZ is used. The thickness of the cathode 109 is 50 µm to 250 µm, and the cathode 109 may be formed by screen printing of slurry.

The feed gas that can be supplied to the cathode 109 of the cell stack 101 for use may be steam; steam and carbon dioxide; hydrogen; nitrogen and hydrogen; or the like.

For the electrolyte 111, YSZ having good airtightness, which ensures low permeability of gasses, and having high oxygen-ion conductivity at high temperatures is mainly used. The film thickness of the electrolyte 111 located on the surface of the cathode 109 is 10 µm to 100 µm, and the electrolyte 111 may be formed by screen printing of slurry.

The anode 113 is composed of, for example, LaSrMnO₃-based oxide or LaCoO₃-based oxide. The anode 113 is coated by screen printing of slurry or by using a dispenser.

The anode 113 can also be formed of a two-layer structure. In such a case, the anode layer (anode intermediate layer) on the electrolyte 111 side is composed of a material that exhibits high ion conductivity and excellent catalysis activity. The anode layer (anode intermediate layer) on the electrolyte 111 side may be Sm-doped ceria, and the anode layer (anode conductive layer) on the anode intermediate layer may be composed of a perovskite-type oxide represented by Sr and Ca doped LaMnO₃. When the anode 113 is of the two-layer structure, the width of the electrolysis single cell is based on the anode conductive layer as a reference.

The interconnector 107 is composed of a conductive perovskite-type oxide represented by M₁₋ₓLₓTiO₃ (M is an alkaline earth metal element and L is a lanthanide element) such as SrTiO₃-based materials and is formed by screen printing of slurry. The interconnector 107 is a dense film so that a feed gas supplied to the cathode 109 and an oxidizing gas supplied to the anode 113 are not mixed. The interconnector 107 has stable durability and electrical conductivity under both atmospheres of an oxidizing atmosphere and a reducing atmosphere. Between adjacent electrolysis single cells 105, the interconnector 107 electrically interconnects the anode 113 of one electrolysis single cell 105 and the cathode 109 of the other electrolysis single cell 105 and thereby interconnects the adjacent electrolysis single cells 105 in series.

The oxidizing gas is a gas containing oxygen at about 15% to 30% and may be representatively the air.

The lead film 115 is required to have electron conductivity and have a thermal expansion coefficient close to those of other materials composing the cell stack 101 and therefore is composed of a composite material of Ni and a zirconia electrolyte material, such as Ni/YSZ, or M₁₋ₓLₓTiO₃ (M is an alkaline earth metal element and L is a lanthanide element) such as SrTiO₃-based materials. The lead film 115 is for supplying DC power to a plurality of electrolysis single cells 105 connected in series by the interconnectors 107.

When power is externally supplied between the cathode 109 and the anode 113 via the lead films 115, a part of a high-temperature feed gas (for example, steam) supplied to the cathode 109 receives electrons and is decomposed into hydrogen ions and oxygen ions, and thereby hydrogen is produced. The decomposed oxygen ions are moved to the anode 113 through inside the electrolyte 111, release electrons, and become oxygen.

Next, a manufacturing method of the cell stack will be described.

The substrate tube 103 is formed by an extrusion molding method, for example.

Slurry for cathodes is coated on the substrate tube 103. The coating width of the slurry for cathodes is changed as appropriate in accordance with a coated position (the first end section 10, the center section 11, or the second end section 12). The coating width in the first end section 10 and/or the second end section 12 is larger than the coating width in the center section 11. The coating width of the slurry for cathodes is preferably adjusted such that the widths (W1, W3) of the electrolysis single cells 105b, 105c located in the first end section 10 and/or the second end section 12 after formed as a cell stack are 1.5 to 3 times the width (W2) of the electrolysis single cell 105a located in the center section 11.

After the slurry for cathodes is coated, slurry for electrolytes and slurry for interconnectors are sequentially coated. The coating width is adjusted in accordance with the coating width of the slurry for cathodes.

The substrate tube 103 on which the slurry films for the cathodes 109, the electrolytes 111, and the interconnectors 107 are formed is co-sintered in the atmosphere. The sintering temperature is, for example, 1350 °C to 1450 °C.

Next, slurry for anodes is coated on the co-sintered substrate tube 103. The coating width is adjusted in accordance with the coating width of the slurry for cathodes.

The substrate tube 103 on which the slurry film for the anodes 113 is formed is sintered in the atmosphere. The sintering temperature is, for example, 1100 °C to 1250 °C. The sintering temperature here is a lower temperature than the co-sintering temperature after the substrate tube 103 to the interconnectors 107 are formed.

Accordingly, the cell stack 101 is obtained in which the widths of the electrolysis single cells 105b, 105c located in the first end section 10 and/or the second end section 12 are 1.5 to 3 times the width (W2) of the electrolysis single cells 105a located in the center section 11.

### [SOEC module]

Next, an electrolysis cell cartridge and an electrolysis cell module according to the present embodiment will be described with reference to Fig. 3 and Fig. 4. Herein, Fig. 3 illustrates one aspect of a solid oxide electrolysis cell (SOEC) module according to the present embodiment. Fig. 4 illustrates a sectional view of one aspect of a solid oxide electrolysis cell (SOEC) cartridge according to the present embodiment.

As illustrated in Fig. 3, an electrolysis cell module 201 includes, for example, a plurality of SOEC cartridges 203 and a module vessel 205 containing the plurality of SOEC cartridges 203. The SOEC module 201 includes feed gas supply pipes 207, a plurality of feed gas supply branch pipes 207a, feed gas exhaust pipes 209, and a plurality of feed gas exhaust branch pipes 209a. The SOEC module 201 includes an oxidant supply pipe (not illustrated), oxidant supply branch pipes (not illustrated), an oxidant exhaust pipe (not illustrated), and a plurality of oxidant exhaust branch pipes (not illustrated).

The feed gas supply pipes 207 are provided inside the module vessel 205, connected to a feed gas supply unit configured to supply a feed gas of a predetermined gas compositions and at a predetermined flow rate in accordance with the amount of hydrogen production from the SOEC module 201, and also connected to the plurality of feed gas supply branch pipes 207a. The feed gas supply pipes 207 are for guiding a predetermined flow rate of the feed gas supplied from the feed gas supply unit described above while branching the feed gas to the plurality of feed gas supply branch pipes 207a. The feed gas supply branch pipes 207a are connected to the feed gas supply pipes 207 and also connected to the plurality of SOEC cartridges 203. The feed gas supply branch pipes 207a are for guiding the feed gas supplied from the feed gas supply pipes 207 to the plurality of SOEC cartridges 203 at substantially an equal flow rate to substantially equalize hydrogen production capacities of the plurality of SOEC cartridges 203.

The feed gas exhaust branch pipes 209a are connected to the plurality of SOEC cartridges 203 and also connected to the feed gas exhaust pipes 209. The feed gas exhaust branch pipes 209a are for guiding the exhaust feed gas exhausted from the SOEC cartridges 203 to the feed gas exhaust pipes 209. The feed gas exhaust pipes 209 are connected to the plurality of feed gas exhaust branch pipes 209a and also partially arranged outside the module vessel 205. The feed gas exhaust pipes 209 are for guiding the exhaust feed gas, which is guided out from the feed gas exhaust branch pipes 209a at substantially an equal flow rate, to outside of the module vessel 205.

For the module vessel 205, a material that possesses pressure resistance and corrosion resistance against oxidizing agents such as oxygen contained in the oxidizing gas is used. For example, stainless steel materials such as SUS304 are preferable.

Herein, the form in which a plurality of SOEC cartridges 203 are assembled and contained in the module vessel 205 is described in the present embodiment. Without being limited thereto, however, for example, a form in which the SOEC cartridges 203 are not assembled and are contained in the module vessel 205 may be employed.

### [SOEC cartridge]

As illustrated in Fig. 4, each SOEC cartridge 203 has a plurality of cell stacks 101, an electrolysis chamber 215, a feed gas supply header 217, a feed gas exhaust header 219, an oxidant (air) supply header 221, and an oxidant exhaust header 223. The SOEC cartridge 203 has an upper tube plate 225a, a lower tube plate 225b, an upper insulation board 227a, and a lower insulation board 227b. Note that, although the SOEC cartridge 203 has the structure such that the feed gas supply header 217, the feed gas exhaust header 219, the oxidant supply header 221, and the oxidant exhaust header 223 are arranged as illustrated in Fig. 4 and thereby a feed gas and an oxidizing gas flow in the opposite directions inside and outside the cell stack 101 in the present embodiment, the arrangement does not necessarily have such structure. For example, the structure may be such that the feed gas and the oxidizing gas flow in the same direction inside and outside the cell stack 101, respectively, or the oxidizing gas flows in a direction orthogonal to the longitudinal direction of the cell stack 101.

The electrolysis chamber 215 is a region formed between the upper insulation board 227a and the lower insulation board 227b. The electrolysis chamber 215 is a region in which the electrolysis single cells 105 of the cell stacks 101 are arranged, which is a region for allowing the feed gas and the oxidizing gas to electrochemically react with each other to produce hydrogen. The temperature of the electrolysis chamber 215 near the center section in the longitudinal direction of the cell stack 101 may be monitored by a temperature measuring unit (a temperature sensor, a thermocouple, or the like), and a high-temperature atmosphere of about 700 °C to 1000 °C is created during steady operation of the electrolysis cell module 201.

The feed gas supply header 217 is a region surrounded by an upper casing 229a and the upper tube plate 225a of the SOEC cartridge 203 and is in communication with the feed gas supply branch pipe 207a via a feed gas supply hole 231a provided to the top of the upper casing 229a. The plurality of cell stacks 101 are joined to the upper tube plate 225a by a seal member 237a. The feed gas supply header 217 is supplied with a feed gas from the feed gas supply branch pipe 207a via the feed gas supply hole 231a and guides this feed gas to inside the substrate tube 103 of the plurality of cell stacks 101 at substantially an even flow rate to make the amount of hydrogen production uniform among the plurality of cell stacks 101.

The feed gas exhaust header 219 is a region surrounded by a lower casing 229b and a lower tube plate 225b of the SOEC cartridge 203 and is in communication with the feed gas exhaust branch pipe 209a (not illustrated) via a feed gas exhaust hole 231b provided in the lower casing 229b. The plurality of cell stacks 101 are joined by the lower tube plate 225b and a seal member 237b. The feed gas exhaust header 219 collects exhaust feed gasses passing inside the substrate tubes 103 of the plurality of cell stacks 101 and supplied to the feed gas exhaust header 219 and guides the collected exhaust feed gasses to the feed gas exhaust branch pipes 209a via the feed gas exhaust hole 231b.

An oxidizing gas of a predetermined gas composition and at a predetermined flow rate is branched into the oxidant supply branch pipes in association with the amount of hydrogen production from the SOEC module 201 and supplied to the plurality of SOEC cartridges 203. The oxidant supply header 221 is a region surrounded by the lower casing 229b, the lower tube plate 225b, and the lower insulation board 227b of the SOEC cartridge 203 and is in communication with oxidant supply branch pipes (not illustrated) via oxidant supply holes 233a provided in the side face of the lower casing 229b. The oxidant supply header 221 is supplied with an oxidizing gas at a predetermined flow rate from oxidant supply branch pipes (not illustrated) via the oxidant supply holes 233a and guides this oxidizing gas to the electrolysis chamber 215 via oxidant supply clearances 235a described later.

The oxidant exhaust header 223 is a region surrounded by the upper casing 229a, the upper tube plate 225a, and the upper insulation board 227a of the SOEC cartridge 203 and is in communication with oxidant exhaust branch pipes (not illustrated) via the oxidant exhaust hole 233b provided in the side wall of the upper casing 229a. The oxidant exhaust header 223 is supplied with an exhaust oxidizing gas from the electrolysis chamber 215 to the oxidant exhaust header 223 via oxidant exhaust clearances 235b described later and guides this exhaust oxidizing gas to the oxidant exhaust branch pipe (not illustrated) via the oxidant exhaust hole 233b.

The upper tube plate 225a is fixed to the side plate of the upper casing 229a such that the upper tube plate 225a, the top plate of the upper casing 229a, and the upper insulation board 227a are substantially parallel between the top plate of the upper casing 229a and the upper insulation board 227a. The upper tube plate 225a has a plurality of holes corresponding to the number of cell stacks 101 provided to the SOEC cartridge 203, and the cell stacks 101 are inserted in the holes, respectively. The upper tube plate 225a supports one of the ends of the plurality of cell stacks 101 airtightly via either one or both of the seal member 237a and an adhesive member and also separates the feed gas supply header 217 and the oxidant exhaust header 223 from each other.

The upper insulation board 227a is arranged at the lower end of the upper casing 229a such that the upper insulation board 227a, the top plate of the upper casing 229a, and the upper tube plate 225a are substantially parallel and is fixed to the side plate of the upper casing 229a. A plurality of holes are provided in the upper insulation board 227a in association with the number of cell stacks 101 provided to the SOEC cartridge 203. The diameter of each of these holes is set to be larger than the outer diameter of the cell stack 101. The upper insulation board 227a has the oxidant exhaust clearances 235b each formed between each inner face of the holes and each outer face of the cell stacks 101 inserted through the upper insulation board 227a.

The upper insulation board 227a serves as a partition between the electrolysis chamber 215 and the oxidant exhaust header 223 to suppress a reduction in strength of the upper tube plate 225a due to an increased temperature of the atmosphere therearound and suppress an increase in corrosion thereof due to the oxidizing agent contained in the oxidizing gas. To suppress thermal deformation of the upper tube plate 225a or the like due to a temperature difference caused by exposure of the upper tube plate 225a or the like to the high temperature within the electrolysis chamber 215, a metal material with high-temperature resistance, such as a Ni-based alloy may be used. The upper insulation board 227a allows the exhaust oxidizing gas, which has passed through the electrolysis chamber 215 and has been exposed to a high temperature, to pass through the oxidant exhaust clearances 235b and guide the exhaust oxidizing gas to the oxidant exhaust header 223.

According to the present embodiment, the feed gas and the exhaust oxidizing gas flow in the opposite directions inside and outside the cell stack 101 due to the structure of the SOEC cartridge 203 described above. Accordingly, the exhaust oxidizing gas is subjected to heat exchange with the feed gas passing inside the substrate tube 103 and supplied to the electrolysis chamber 215, is cooled to a temperature at which no deformation such as buckling occurs in the upper tube plate 225a or the like made of a metal material, and is supplied to the oxidant exhaust header 223. The feed gas is heated by heat exchange with the exhaust oxidizing gas exhausted from the electrolysis chamber 215 and is supplied to the electrolysis chamber 215. As a result, the feed gas pre-heated and heated to a temperature suitable for hydrogen production can be supplied to the electrolysis chamber 215 without using a heater or the like.

The lower tube plate 225b is fixed to the side plate of the lower casing 229b such that the lower tube plate 225b, the bottom plate of the lower casing 229b, and the lower insulation board 227b are substantially parallel between the bottom plate of the lower casing 229b and the lower insulation board 227b. The lower tube plate 225b has a plurality of holes corresponding to the number of cell stacks 101 provided to the SOEC cartridge 203, and the cell stacks 101 are inserted in the holes, respectively. The lower tube plate 225b supports the other of the ends of the plurality of cell stacks 101 airtightly via either one or both of the seal member 237b and an adhesive member and also separates the feed gas exhaust header 219 and the oxidant supply header 221 from each other.

The lower insulation board 227b is arranged at the upper end of the lower casing 229b such that the lower insulation board 227b, the bottom plate of the lower casing 229b, and the lower tube plate 225b are substantially parallel and is fixed to the side plate of the lower casing 229b. A plurality of holes are provided in the lower insulation board 227b in association with the number of cell stacks 101 provided to the SOEC cartridge 203. The diameter of each of these holes is set to be larger than the outer diameter of the cell stack 101. The lower insulation board 227b has oxidant supply clearances 235a each formed between each inner face of the holes and each outer face of the cell stacks 101 inserted through the lower insulation board 227b.

The lower insulation board 227b serves as a partition between the electrolysis chamber 215 and the oxidant supply header 221 to suppress a reduction in strength of the lower tube plate 225b due to an increased temperature of the atmosphere therearound and suppress an increase in corrosion thereof due to the oxidizing agent contained in the oxidizing gas. The lower tube plate 225b or the like are made of a metal material with high-temperature resistance, such as Inconel, and prevent thermal deformation due to an increased temperature difference within the lower tube plate 225b or the like caused by exposure of the lower tube plate 225b or the like to a high temperature. The lower insulation board 227b allows the oxidizing gas supplied to the oxidant supply header 221 to pass through the oxidant supply clearances 235a and guide the supplied oxidizing gas to the electrolysis chamber 215.

According to the present embodiment, the exhaust feed gas and the oxidizing gas flow in the opposite directions inside and outside the cell stack 101 due to the structure of the SOEC cartridge 203 described above. Accordingly, the exhaust feed gas passing through the electrolysis chamber 215 inside the substrate tube 103 is subjected to heat exchange with the oxidizing gas supplied to the electrolysis chamber 215, is cooled to a temperature at which no deformation such as buckling occurs in the lower tube plate 225b or the like made of a metal material, and is supplied to the feed gas exhaust header 219. The oxidizing gas is heated by heat exchange with the exhaust feed gas and is supplied to the electrolysis chamber 215. As a result, the oxidizing gas heated to a temperature required for hydrogen production can be supplied to the electrolysis chamber 215 without using a heater or the like.

Next, the basis for setting the width of the electrolysis single cell 105, the length (L1) of the first end section 10, and the length (L3) of the second end section 12 will be described.

### [Test 1]

The temperature distributions in the axial direction were simulated for cell stacks (Examples 1, 2) in which the width or widths of the electrolysis single cells 105b, 105c located in the first end section 10 or the first end section 10 and the second end section 12 are larger than the width of the electrolysis single cell 105a located in the center section 11. Simulations were similarly performed (Comparative examples 1, 2) also for the conventional cell stacks as a reference in which all the widths of the electrolysis single cells 105 located in the first end section 10, the center section 11, and the second end section 12, respectively, are the same. In the simulations, changes in resistance were calculated from differences in the electrode area due to changes in widths of the electrolysis cells, and the temperature distributions were calculated from changes in heat balance based on the amount of heat generation in accordance with the value of resistance and current. The lengths of the cell stacks were the same, and the amount of hydrogen production was calculated from the value of current and the number of cells under consideration that a change in the cell dimension will cause a change in the number of cells.

The widths (W1, W2, W3) of the electrolysis single cells located in the first end section 10, the center section 11, and the second end section 12 were set as follows.
Comparative example 1: W1 = W2 = W3 (reference current)
Comparative example 2: W1 = W2 = W3 (higher current)
Example 1: W1 > W2 = W3 (higher current)
Example 2: W1 = W3 > W2 (higher current)

In Comparative examples 1, 2 and Examples 1, 2, the widths of the electrolysis single cells located in the same section were the same. The size of the substrate tube 103, the length (L) in the axial direction of the cell section 104, and lengths (L1, L2, L3) in the axial direction of the first end section 10, the center section 11, and the second end section 12 relative to the length (L) all were the same. The current conducted in Comparative example 2 and Examples 1 and 2 was higher than that in Comparative example 1.

Fig. 5A is a schematic diagram of the cell stack of Example 2. Fig. 5B represents simulation results for the temperature distribution in the axial direction of the cell stack illustrated in Fig. 5A. Fig. 5B also illustrates the temperature distributions in Examples 1, 2 and Comparative examples 1, 2. In Fig. 5B, the horizontal axis represents the temperature (°C) of cell stacks, and the vertical axis represents the axial length (mm) of cell stacks (substrate tubes). The length in the vertical axis is measured from the bottom of the second end section (the end opposite to the center section side) as zero (0). The feed gas flows from the first end section side to the second end section side of a cell stack. Note that the temperature of a cell stack may be a temperature inside the electrolysis chamber 215 located at the same position in the axial length of the cell stack.

Comparative examples 1, 2 and Examples 1, 2 all exhibited a tendency that the temperature was lower at the ends in the axial direction of the cell stack and was highest at the center section. In comparison between Comparative examples 1 and 2, the maximum temperature was higher in Comparative example 2 in which the current is higher. When current flows in a cell stack, Joule heat is generated, and the temperature of the cell stack increases. Since the Joule heat is defined as (current)² x resistance, an increase of conducted current generates more Joule heat.

In comparison between Comparative example 2 and Examples 1, 2 in which the same current was conducted, the maximum temperature in Examples 1, 2 including wider electrolysis single cells was lower than that in Comparative example 2. It has been confirmed that the electrolysis single cells having a larger (wider) width than the width of the electrolysis single cell 105a located in the center section 11 are arranged in the first end section 10 and/or the second end section 12, and thereby the maximum temperature of the cell stack can be reduced. An excessively increased temperature of a cell stack causes Ni of the cathode to sinter and increases the internal resistance of the electrolysis single cell, and this leads to deterioration in durability of the cell stack itself. It is therefore beneficial to be able to reduce the maximum temperature.

Both ends of a cell stack are held by tube plates. An excessively increased temperature of a cell stack leads to deterioration of the tube plates. According to the results in Fig. 5B, it has been implied that, when electrolysis single cells having a larger (wider) width than the width of the electrolysis single cell 105a located in the center section 11 are arranged in the first end section 10 and/or the second end section 12, deterioration of the tube plates supporting the cell stack can also be suppressed.

In comparison between Examples 1 and 2, the maximum temperature is lower in Example 2 including wider electrolysis single cells at both ends of the cell section 104. It has been implied from this result that the effect of suppressing the temperature is increased by arranging wider electrolysis single cells in both the first end section 10 and the second end section 12 or increasing the number of wider electrolysis single cells.

An increased current density of current flowing in a cell stack causes more feed gas to be decomposed accordingly and increases the amount of hydrogen production. In Examples 1, 2, the maximum temperature of a cell stack can be suppressed to be lower than in the conventional art even with a flow of more current than that in the conventional one. The maximum temperature in Example 2 was substantially the same as that in Comparative example 1 in which the current density is lower.

### [Test 2]

For cell stacks (Example 3 to Example 11) having different widths of electrolysis single cells located in the first end section, the center section, and the second end section, operation at the average voltage: 1.5 V and the maximum temperature set value: 950 °C was simulated, and the current density, the maximum temperature (°C) of the cell stack (substrate tube), the temperature (°C) of the lower tube plate, and the amount of hydrogen production were calculated. The amount of hydrogen production was described as a ratio when the amount of hydrogen production in Comparative example 1 was defined as 1. In the simulations, changes in cell resistance were calculated from differences in the electrode area due to changes in widths of the electrolysis cells, and the temperature distributions were calculated from changes in heat balance based on the amount of heat generation in accordance with the value of resistance and current. The lengths of the cell stacks were the same, and the amount of hydrogen production was calculated from the value of current and the number of cells under consideration that a change in the cell dimension will cause a change in the number of cells. The percentages of the length of the first end section (L1), the length of the center section (L2), and the length of the second end section (L3) relative to the cell section length of 100% were 10%, 80%, and 10%, respectively.

Figs. 6 and 7 illustrate width conditions and simulation results for the electrolysis single cells in respective Examples.

In this test, the current density was set so that the maximum temperature of a cell stack was 950 °C. According to Fig. 6, the following result has been indicated, that is, compared to Comparative examples 3 and 4 in which widths of all the electrolysis single cells included in the cell section are the same, more current can be conducted and a larger amount of hydrogen production is obtained in Examples 3 to 5 in which wider electrolysis single cells than those in the center section are arranged in the first end section and/or the second end section. In comparison between Examples 3 to 5, it has been implied that the largest current can flow and more hydrogen can be produced in Example 5 in which the wider electrolysis single cells are arranged in both of the first end section and the second end section.

According to Fig. 7, it has been confirmed that the current density and the amount of hydrogen production can be higher in Example 5 to Example 9 in which widths of the electrolysis single cells located in the first end section and the second end section are 1.5 to 3 times the width of the electrolysis single cell located in the center section. In Example 5 to Example 9, the temperature of the lower tube plate is also lower than that in Comparative example 3.

In comparison between Example 5 and Example 7, the current density and the amount of hydrogen production were larger in Example 7, in which the width (W3) of electrolysis single cells located in the second end section was doubled and larger than the width (W1) of electrolysis single cells located in the first end section, than in Example 5, in which the width of electrolysis single cells was doubled in both of the first end section and the second end section. Accordingly, it has been implied that the width of electrolysis single cells located in the second end section more affects the current density and the amount of hydrogen production.

Out of Example 5 to Example 11, Example 10 in which widths of the electrolysis single cells located in the first end section and the second end section are 1.3 times that in the center section exhibited the lowest current density of current that can be conducted. Example 11 exhibited the same current density as Examples 5 and 6 but exhibited a smaller amount of hydrogen production.

In Example 5 to Example 11, the lengths (L1, L3) in the axial direction of the first end section and the second end section are the same. An increase in widths of electrolysis single cells reduces the number of electrolysis single cells that can be arranged within the first end section and the second end section and, as a result, reduces the number of electrolysis single cells in the entire cell section. The number of electrolysis single cells affects the amount of hydrogen production. In Example 11, it is considered that, as a result of excessively increased widths of electrolysis single cells, the number of electrolysis single cells was reduced, which affected the amount of hydrogen production. In Examples 8 and 9, it is considered that, although the number of electrolysis single cells in the cell section was also reduced similarly in Example 7, the increase in the current density of current that can be conducted compensated the impact of the reduction in the number of electrolysis single cells on the amount of hydrogen production, and as a result, the amount of hydrogen production was increased.

According to Figs. 6 and 7, it has been indicated that larger widths of electrolysis single cells arranged in the first end section and the second end section tend to result in a lower temperature of the lower tube plate.

### [Test 3]

For cell stacks having different lengths of the first end section, the center section, and the second end section in the cell section (the length in the axial direction of the substrate tube), operation at the average voltage: 1.5 V and the maximum temperature set value: 950 °C was simulated, and the current density, the maximum temperature (°C) of the cell stack (substrate tube), temperature (°C) of the lower tube plate, and the amount of hydrogen production were calculated. The sizes of cell stacks and the overall lengths of cell sections are the same in all the Examples. The amount of hydrogen production was described as a ratio when the amount of hydrogen production in Comparative example 1 was defined as 1. In the simulations, changes in cell resistance were calculated from differences in the electrode area due to changes in widths of the electrolysis cells, and the temperature distributions were calculated from changes in heat balance based on the amount of heat generation in accordance with the value of resistance and current. The lengths of the cell stacks were the same, and the amount of hydrogen production was calculated from the value of current and the number of cells under consideration that a change in the cell dimension will cause a change in the number of cells. The widths (W1, W3) of electrolysis single cells located in the first end section and the second end section were twice as large as that in the center section.

Fig. 8 illustrates configuration conditions for the cell section length and simulation results in respective Examples.

In Examples 5 and 11 to 16 in which widths of electrolysis single cells located in the first end section and the second end section were twice as large as that in the center section, results that the current density of current that can be conducted in the cell section and the amount of hydrogen production in the cell section are larger than those in Comparative examples 3 and 4 were indicated. The temperature of the lower tube plate is also lower in Example 5 and Examples 11 to 16 than in Comparative examples 3 and 4.

The amount of hydrogen production is particularly larger in Example 5 and Examples 11 to 14 in which the length of the first end section and the length of the second end section were 5% to 20% relative to the overall length of the cell section (100%), respectively, in particular, in Examples 5, 11, and 12 in which the length of the first end section and the length of the second end section were 5% to 10%, respectively.

In Example 15 in which the ratio of the lengths of the first end section and the second end section relative to the overall length of the cell section is smaller, although the number of electrolysis single cells that can be arranged in the cell section was increased, the current density of current that can be conducted in the cell section was not increased as much as other Examples. In Example 16 in which the ratio of the lengths of the first end section and the second end section relative to the overall length of the cell section is larger, although the current density of current that can be conducted in the cell section was increased, the number of electrolysis single cells that can be arranged in the cell section was reduced. Such a reduction in the number of electrolysis single cells is a conceivable factor that causes the amount of hydrogen production in Example 16 to be smaller than that in other Examples.

In Example 11, although the length of the first end section is the same as that in Example 5, the length of the second end section is longer than that in Example 5. A longer length of the second end section increases the number of electrolysis single cells that can be arranged within the second end section. That is, the number of wider electrolysis single cells arranged within the second end section is larger in Example 11 than in Example 5. The amount of hydrogen production was larger in Example 11 than in Example 5.

On the other hand, Example 11 has the same length of the second end section as Example 13 but has a shorter length of the first end section than Example 5. In Example 11, despite the fact that the number of wider electrolysis single cells arranged in the first end section was smaller, the amount of hydrogen production was larger than that in Example 13.

According to Fig. 8, it has been indicated that a longer length of the first end section and a longer length of the second end section tend to result in a lower temperature of the lower tube plate.

### <Supplementary Notes>

The electrolysis cell stack, the electrolysis cell cartridge, the electrolysis cell module, and the manufacturing method of the electrolysis cell stack according to the embodiment described above are understood as follows, for example.

The electrolysis cell stack (101) according to the first aspect of the present disclosure has electrolysis single cells (105) each having a cathode (109) containing Ni, an anode (113), and an electrolyte (111) and formed circumferentially on a substrate tube (103); and interconnectors (107) electrically interconnecting the plurality of electrolysis single cells aligned in an axial direction of the substrate tube. When the distance between ends of the anode in the axial direction of the substrate tube in one electrolysis single cell of the electrolysis single cells is defined as a width (W) of the electrolysis single cell, and a region on the substrate tube in which the plurality of electrolysis single cells are aligned is sectioned into a first end section (10), a center section (11), and a second end section (12) along the axial direction, the width (W1) of the electrolysis single cell located in the first end section and/or the width (W3) of the electrolysis single cell located in the second end section is larger than the width (W2) of the electrolysis single cell located in the center section.

A larger (wider) width of electrolysis single cells reduces the amount of heat generation (Joule heat) per electrolysis single cell but does not change the ionic mobility and the current density on an electrolysis single cell basis. It is thus possible to increase the amount of the electrolyzed product per electrolysis cell stack while suppressing a rise in temperature of the electrolysis cell stack by arranging wider electrolysis cells in one or both of sections close to the ends (the first end section and/or the second end section) than in the center section out of the plurality of electrolysis single cells aligned on the substrate tube.

In the electrolysis cell stack according to the second aspect of the present disclosure, in the first aspect described above, the width of the electrolysis single cell located in the first end section and/or the width of the electrolysis single cell located in the second end section is 1.5 times to 3 times the width of the electrolysis single cell located in the center section.

An excessively small width of the electrolysis single cell would be likely to cause a rise in temperature of the cell stack, and an excessively large width would reduce the electrolytic capacity. When the width of the electrolysis single cells located in the first end section and/or the second end section is 1.5 to 3 times that in the center section, the ability to suppress a rise in temperature and the electrolytic capacity can be exerted in a well-balanced manner, and a larger amount of the electrolyzed product can be obtained.

In the electrolysis cell stack according to the third aspect of the present disclosure, in the first aspect or the second aspect described above, the width of the electrolysis single cell located in the first end section is equal to the width of the electrolysis single cell located in the second end section.

Since the widths of the electrolysis single cells in the first end section and the second end section are made equal, the manufacturing is facilitated.

In the electrolysis cell stack according to the fourth aspect of the present disclosure, in the first aspect or the second aspect described above, the first end section is an end section upstream in a gas flow direction inside the substrate tube, the second end section is an end section downstream in the gas flow direction inside the substrate tube, and the width of the electrolysis single cell located in the second end section is larger than the width of the electrolysis single cell located in the first end section.

In electrolysis cell stacks, the temperature is highest in the center section, and both the end sections have lower temperatures than the center section. However, since the temperature of the feed gas increases when the feed gas passes through the center section, the temperature is less likely to decrease in the second end section downstream in the gas flow direction than in the first end section upstream in the same. Since the width of the electrolysis single cell located in the second end section is set to be larger than that in the first end section to suppress generation of Joule heat in the second end section, the acceptable temperatures for members holding the electrolysis cell stack are likely to be ensured even when a higher maximum temperature is set.

In the electrolysis cell stack according to the fifth aspect of the present disclosure, in any of the first aspect to the fourth aspect described above, the length (L1) in the axial direction of the first end section is 5% or greater and 20% or less relative to the total length (L) in the axial direction of the center section, the first end section, and the second end section.

A larger (longer) region including wider electrolysis single cells reduces the number of electrolysis single cells arranged in the entire electrolysis cell stack. A reduction in the number of electrolysis single cells as a whole reduces the total amount of the electrolyzed product accordingly. The length of the first end section set within the range described above can compensate the impact caused by a reduction in the number of electrolysis single cells and increase the amount of the electrolyzed product.

In the electrolysis cell stack according to the sixth aspect of the present disclosure, in any of the first aspect to the fifth aspect described above, the length (L3) in the axial direction of the second end section is 5% or greater and 20% or less relative to the total length (L) in the axial direction of the center section, the first end section, and the second end section.

The length of the second end section set within the range described above can compensate the impact caused by a reduction in the number of electrolysis single cells and increase the amount of the electrolyzed product.

In the electrolysis cell stack according to the seventh aspect of the present disclosure, in any of the first aspect to the sixth aspect described above, the first end section is an end section upstream in a gas flow direction inside the substrate tube, the second end section is an end section downstream in the gas flow direction inside the substrate tube, and the length in the axial direction of the second end section is larger than the length in the axial direction of the first end section.

By setting the length of the second end section to be larger than the length of the first end section, it is possible to more effectively suppress the generation of Joule heat in the second end section.

The electrolysis cell cartridge according to the eighth aspect of the present disclosure includes the electrolysis cell stack according to any of the first aspect to the seventh aspect described above.

The electrolysis cell module according to the ninth aspect of the present disclosure includes the electrolysis cell cartridge according to the eighth aspect described above.

The manufacturing method of an electrolysis cell stack according to the tehth aspect of the present disclosure is a manufacturing method of an electrolysis cell stack including a plurality of electrolysis single cells each having a cathode containing Ni, an anode, and an electrolyte arranged between the cathode and the anode, the electrolysis single cells being formed circumferentially on a substrate tube, and interconnectors electrically interconnecting the plurality of electrolysis single cells aligned in an axial direction of the substrate tube. The manufacturing method includes: defining the distance between ends of the anode in the axial direction of the substrate tube in one electrolysis single cell of the electrolysis single cells as a width of the electrolysis single cell, and sectioning a region on the substrate tube into a first end section, a center section, and a second end section along the axial direction, the plurality of electrolysis single cells being aligned in the region; and forming the width of the electrolysis single cell located in the first end section and/or the width of the electrolysis single cell located in the second end section to be larger than the width of the electrolysis single cell located in the center section.

### [Reference Signs List]

- 10: first end section
- 11: center section
- 12: second end section
- 101: cell stack (electrolysis cell stack)
- 103: substrate tube
- 105: electrolysis single cell
- 107: interconnector
- 109: cathode
- 111: electrolyte
- 113: anode
- 115: lead film
- 201: electrolysis cell module (S0EC module)
- 203: electrolysis cell cartridge (S0EC cartridge)
- 207: feed gas supply pipe
- 209: feed gas exhaust pipe
- 215: electrolysis chamber
- 217: feed gas supply header
- 219: feed gas exhaust header
- 225a: upper tube plate
- 225b: lower tube plate

## Claims

1. An electrolysis cell stack comprising:
a plurality of electrolysis single cells each having a cathode containing Ni, an anode, and an electrolyte interposed between the cathode and the anode, the electrolysis single cells being formed circumferentially on a substrate tube; and
interconnectors electrically interconnecting the plurality of electrolysis single cells aligned in an axial direction of the substrate tube,
wherein when the distance between the ends of the anode in the axial direction of the substrate tube in one electrolysis single cell of the electrolysis single cells is defined as a width of the electrolysis single cell, and a region on the substrate tube in which the plurality of electrolysis single cells are aligned is sectioned into a first end section, a center section, and a second end section along the axial direction,
the width of the electrolysis single cell located in the first end section and/or the width of the electrolysis single cell located in the second end section is 1.5 to 3 times the width of the electrolysis single cell located in the center section.

2. The electrolysis cell stack according to claim 1, wherein the width of the electrolysis single cell located in the first end section is equal to the width of the electrolysis single cell located in the second end section.

3. The electrolysis cell stack according to claim 1,
wherein the first end section is an end section upstream in a gas flow direction inside the substrate tube,
wherein the second end section is an end section downstream in the gas flow direction inside the substrate tube, and
wherein the width of the electrolysis single cell located in the second end section is larger than the width of the electrolysis single cell located in the first end section.

4. The electrolysis cell stack according to claim 1, wherein the length in the axial direction of the first end section is 5% or greater and 20% or less relative to the total length in the axial direction of the center section, the first end section, and the second end section.

5. The electrolysis cell stack according to claim 1, wherein the length in the axial direction of the second end section is 5% or greater and 20% or less relative to the total length in the axial direction of the center section, the first end section, and the second end section.

6. The electrolysis cell stack according to claim 1,
wherein the first end section is an end section upstream in a gas flow direction inside the substrate tube,
wherein the second end section is an end section downstream in the gas flow direction inside the substrate tube, and
wherein the length in the axial direction of the second end section is larger than the length in the axial direction of the first end section.

7. An electrolysis cell cartridge comprising the electrolysis cell stack according to any one of claims 1 to 6.

8. An electrolysis cell module comprising the electrolysis cell cartridge according to claim 7.

9. A manufacturing method of an electrolysis cell stack comprising a plurality of electrolysis single cells each having a cathode containing Ni, an anode, and an electrolyte arranged between the cathode and the anode, the electrolysis single cells being formed circumferentially on a substrate tube, and interconnectors electrically interconnecting the plurality of electrolysis single cells aligned in an axial direction of the substrate tube, the manufacturing method comprising:
defining the distance between the ends of the anode in the axial direction of the substrate tube in one electrolysis single cell of the electrolysis single cells as a width of the electrolysis single cell, and sectioning a region on the substrate tube in which the plurality of electrolysis single cells are aligned into a first end section, a center section, and a second end section along the axial direction; and
forming the width of the electrolysis single cell located in the first end section and/or the width of the electrolysis single cell located in the second end section to be 1.5 to 3 times the width of the electrolysis single cell located in the center section.
